# EUROPÄISCHE PATENTSCHRIFT

(11) **EP 2 280 876 B1**
(45) Veröffentlichungstag und Bekanntmachung des Hinweises auf die Patenterteilung: **20.06.2012**
(21) Anmeldenummer: 09734730.6
(22) Anmeldetag: 01.04.2009
(51) Int. Cl.: B65B 35/18, B65B 35/26, B65B 57/14, B65G 47/84

(54) **VORRICHTUNG ZUM FÖRDERN VON PRODUKTEN**
APPARATUS FOR CONVEYING PRODUCTS
DISPOSITIF POUR TRANSPORTER DES PRODUITS

(30) Priorität: 22.04.2008 DE 102008001324
(43) Veröffentlichungstag der Anmeldung: 09.02.2011
(73) Patentinhaber: Robert Bosch GmbH, 70442 Stuttgart (DE)
(72) Erfinder: FUELLEMANN, Cyrille, 8200 Schaffhausen (CH); SCHWARZ, Daniel, 8476 Unterstammheim (CH)
(86) Internationale Anmeldenummer: PCT/EP2009/053856
(87) Internationale Veröffentlichungsnummer: WO 2009/130116

(56) Entgegenhaltungen:
- EP-A- 0 769 459
- GB-A- 2 241 684
- GB-A- 2 256 840

## Beschreibung

### Technisches Gebiet

Die Erfindung betrifft eine Vorrichtung zum Fördern von Produkten zu einem Bestimmungsort.

### Stand der Technik

Aus EP-A-1 048 569 ist eine Vorrichtung zum Zusammenführen von zwei Komponenten zu einem aus den beiden Komponenten bestehenden Produkt bekannt. Die Vorrichtung hat einen ersten Förderer zum Zuführen der ersten Komponente und einen umlaufenden zweiten Förderer mit ersten Mitnehmern für die erste Komponente und zweiten Mitnehmern für die bei einer Zuführstation zugeführte zweite Komponente. Die Vorrichtung ist mit optischen Fühlern zur Überwachung der ersten Komponenten auf Unversehrtheit und der korrekten Platzierung der zweiten Komponenten ausgestattet. Zeigt ein Fühler einen Fehler an, so wird das entsprechende fehlerhafte Produkt mittels eines Ausschiebehebels als Ausschuss seitlich ausgestossen.

Aus EP-A-1 216 939 ist eine Vorrichtung zum Fördern und Zwischenspeichern von Produkten bekannt. Die Vorrichtung hat eine Karusselleinrichtung mit in einer ersten Umlaufbahn umlaufenden Greifern zur zeitweiligen Übernahme von auf einem Bandförderer zu einem Bestimmungsort zu fördernden Produkten und Übergabe der Produkte an einen Speicher mit einer zweiten Umlaufbahn.

Die Produkte können mittels der Greifer dem Speicher wieder entnommen und auf den Bandförderer zurückgelegt werden.

### Darstellung der Erfindung

Der Erfindung liegt die Aufgabe zugrunde, eine Vorrichtung der eingangs genannten Art zu schaffen, die mit einfachen Mitteln eine Wiederverwendung von am Bestimmungsort nicht benötigten Produkten durch Rückführung ermöglicht.

Ein anderes Ziel der Erfindung ist die Bereitstellung einer für die Zuführung von Produkten zu einer Verpackung bei schnell laufenden Verpackungsmaschinen geeigneten, modular aufgebauten Vorrichtung.

Gemäss einem weiteren Ziel der Erfindung soll die Vorrichtung für den Einsatz in einem kontinuierlichen Verpackungsprozess geeignet sein, bei welchem Produkte, wie z. B. Tablettenblister oder Patienteninformationen, den Verpackungen zugeführt und aufgeklebt werden.

Zur erfindungsgemässen Lösung der Aufgabe führt eine Vorrichtung umfassend eine umlaufende Förderkette mit entlang einer ersten Umlaufbahn umlaufenden Mitnehmern mit einer Kettenteilung, ein umlaufendes Fördermittel mit an diesem von einander beabstandet angeordneten, entlang einer zweiten Umlaufbahn umlaufenden Greifern, einen ersten Bereich der ersten und zweiten Umlaufbahn zur Übernahme von Produkten mittels der Greifer von der Förderkette aus der ersten Umlaufbahn in die zweite Umlaufbahn, einen zweiten Bereich der zweiten Umlaufbahn zur Übergabe von Produkten von den Greifern am Bestimmungsort und einen dritten Bereich der ersten und zweiten Umlaufbahn zur Rückgabe von am Bestimmungsort nicht benötigten Produkten von den Greifern aus der zweiten Umlaufbahn auf die Förderkette in die erste Umlaufbahn, wobei die Wegstrecke der Förderkette auf der ersten Umlaufbahn von einem Übernahmeort der Produkte im ersten Bereich zu einem Rückgabeort im dritten Bereich und die Wegstrecke der Greifer auf der zweiten Umlaufbahn vom Übernahmeort der Produkte im ersten Bereich zum Rückgabeort im dritten Bereich so gewählt sind, dass sich zwischen der Förderkette und den Greifern zwischen dem Rückgabeort und dem Übernahmeort eine Phasenverschiebung um einen Bruchteil der Kettenteilung ergibt.

Bevorzugt verläuft die zweite Umlaufbahn im zweiten Bereich wahlweise in einer von zwei höhenversetzten Ebenen. Hierzu ist die zweite Umlaufbahn zweckmässigerweise kulissengesteuert und im zweiten Bereich über eine Weiche einstellbar.

Der Umlauf der Förderkette und der Umlauf der Greifer erfolgen synchron mit derselben Geschwindigkeit über je einen Antrieb, wobei auch ein gemeinsamer zentraler Antrieb mit entsprechenden Getrieben möglich ist.

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Draufsicht auf eine erfindungsgemässe Vorrichtung;
- Fig. 2: eine Seitenansicht der Vorrichtung von Fig. 1 in Blickrichtung y.

### Beschreibung von Ausführungsbeispielen

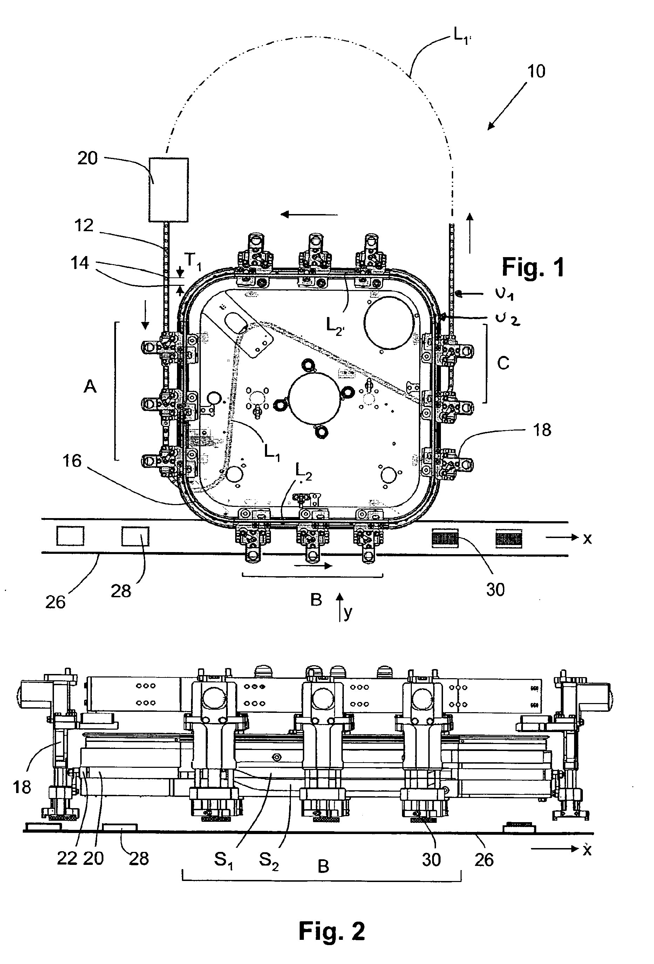

Eine in den Fig. 1 und 2 gezeigte Fördervorrichtung 10 weist ein auf einer ersten Umlaufbahn U₁ umlaufende erste Förderkette 12 mit Mitnehmern 14 mit einer Kettenteilung T₁ und eine umlaufende zweite Förderkette 16 mit an dieser von einander beabstandet festgelegten, auf einer zweiten Umlaufbahn U₂ umlaufenden Greifern 18. Produkte werden mittels einer Spendereinrichtung 20 zwischen jeweils zwei aufeinander folgenden Mitnehmern 14 auf die Förderkette 12 gelegt, in einem ersten Bereich A mittels der Greifer 18 von der Förderkette 12 aufgenommen und zu ihrem Bestimmungsort in einen auf den ersten Bereich A nachfolgenden zweiten Bereich B geführt. An ihrem Bestimmungsort nicht benötigte Produkte werden mittels der Greifer 18 in einen auf den zweiten Bereich B nachfolgenden dritten Bereich C weitergeführt, dort auf die Förderkette 12 zurückgelegt und zur Spendereinrichtung 20 zurückgeführt. Über ein z. B. optisches System erkennt die Spendereinrichtung 20 durch rückgeführte Produkte bereits belegte Zwischenräume zwischen benachbarten Mitnehmern 14 und legt in diese kein weiteres Produkt ab.

Die Wegstrecke L₁ der Förderkette 12 auf der ersten Umlaufbahn U₁ von einem Übernahmeort der Produkte im ersten Bereich A zu einem Rückgabeort im dritten Bereich C und die Wegstrecke L₂ der Greifer 18 auf der zweiten Umlaufbahn U₂ vom Übernahmeort der Produkte im ersten Bereich A zum Rückgabeort im dritten Bereich C sind so gewählt, dass sich zwischen der Förderkette 12 und den Greifern 18 zwischen dem Rückgabeort und dem Übernahmeort eine Phasenverschiebung ΔT₁ um einen Bruchteil der Kettenteilung T₁ ergibt. Die Phasenverschiebung ΔT₁ ist notwendig, weil die auf der Förderkette 12 geförderten Produkte nicht mittig zwischen zwei Mitnehmern 14 liegen, sondern jeweils dem bezüglich der Förderrichtung hinteren Mitnehmer 14 anliegen und aus dieser Position von den Greifern 18 im Bereich A übernommen werden. Durch die Phasenverschiebung ΔT₁ wird verhindert, dass die Produkte aufgrund kleiner Toleranzen beim Ablegen am Rückgabeort im dritten Bereich C versehentlich auf einen Mitnehmer 14 zu liegen kommen. Die Phasenverschiebung ΔT₁ wird üblicherweise so bemessen, dass die rückgeführten Produkte am Rückgabeort im dritten Bereich C etwa mittig zwischen benachbarte Mitnehmer 14 abgelegt werden.

Die Wegstrecke L_{1'} der Förderkette 12 auf der ersten Umlaufbahn U₁ vom Rückgabeort im dritten Bereich C zum Übernahmeort der Produkte im ersten Bereich A und die Wegstrecke L_{2'} der Greifer 18 auf der zweiten Umlaufbahn U₂ vom Rückgabeort im dritten Bereich C zum Übernahmeort der Produkte im ersten Bereich A sind entsprechend so gewählt, dass sich die zwischen der Förderkette 12 und den Greifern 18 zwischen dem Übernahmeort und dem Rückgabeort ergebende Phasenverschiebung ΔT₁ wieder rückgängig gemacht wird.

Um die Umlaufbahnen der Förderkette 12 und der Greifer 18 den Gegebenheiten entsprechend mit einer optimalen Länge zu versehen, können die phasenverschobenen Hin- und Rücklauflängen um mindestens eine Kettenteilung verlängert oder verkürzt werden.

Die Greifer 18 sind als Vakuumgreifer ausgeführt. Beim Aufnehmen der Produkte von der Förderkette 12 wird das Vakuum jeweils aktiviert, nach dem Absetzen der Produkte deaktiviert.

Aus Fig. 2 ist ersichtlich, dass die Greifer 18 über einen in einer umlaufenden Führungsnut 20 geführten Führungszapfen 22 kulissengesteuert sind und im zweiten Bereich B mittels einer Weiche 24 entweder über eine erste Führungsnutstrecke S₁ auf gleicher Höhe wie die umlaufende Führungsnut 20 oder über eine tiefer liegende zweite Führungsnutstrecke S₂ auf ein tieferes Niveau abgesenkt und am Ende dieser zweiten Führungsnutstrecke S₂ wieder auf das Niveau der umlaufende Führungsnut 20 angehoben werden können. Im gezeigten Beispiel befinden sich drei Greifer 18 im zweiten Bereich B alle in der ersten Führungsnutstrecke S₁, sind also nicht abgesenkt.

Wie in den Fig. 1 und 2 gezeigt, sind die Greifer 18 im zweiten Bereich B über eine sich in gleicher Richtung bewegende Transporteinrichtung 26 einer in der Zeichnung nicht wiedergegebenen Verpackungsmaschine positioniert. Auf der Transporteinrichtung 26 werden z. B. Verpackungszuschnitte 28 angeliefert. Über die Greifer 18 der Fördervorrichtung 10 werden Tablettenblister 30 an die Verpackungszuschnitte 28 herangeführt und mit diesen verklebt. Hierzu werden die angelieferten Verpackungszuschnitte 28 vorgängig z. B. mit einem Tropfen Heissleim oder Schmelzkleber versehen. Beim Absenken der Greifer 18 auf die zweite Führungsnutstrecke S₂ werden die Tablettenblister 30 auf die Verpackungszuschnitte 28 abgelegt und durch Anpressen an diesen über den Klebstoff befestigt. Hierbei wird das Vakuum in der Klebeposition deaktiviert. Zur Rückführung vorgesehene Tablettenblister 30 verbleiben an den Greifern 18, welche den zweiten Bereich B ohne Absenkung über die erste Führungsnutstrecke S₁ durchlaufen.

Um Ausschuss zu vermeiden soll bei einem Maschinenstopp sichergestellt sein, das bereits mit Heissleim oder Schmelzkleber versehene Verpackungen noch mit einem Produkt beklebt werden. Weiter sollen keine Produkte aufgeklebt werden sofern kein Verpackungszuschnitt vorhanden ist, da dieser beispielsweise in einer vorhergehenden Kontrollvorrichtung ausgeschleust wurde.

Die Transporteinrichtung 26 -- z. B. eine Transportkette mit Kettenteilung -- ist hierzu in Segmente unterteilt, die mit entkoppelbaren Übergabeeinrichtungen versehen sind. Diese Übergabeeinrichtungen bestehen beispielsweise aus einem oberhalb der Transportkette angeordneten, kurzen Kettenstück, welches die Produkte "von oben" von einem Segment ins nächste schiebt. Bei einem Maschinenstopp werden diese Übergabeeinrichtungen entkoppelt, so dass die normal synchron laufenden Kettensegmente der Maschine nun unabhängig betrieben werden und die teilweise ausgeführten Verklebungen noch zu Ende bringen können.

Die nicht aufgeklebten Produkte werden im Rücklauf wieder in die umlaufend ausgeführte Förderkette 12 für die Produkte abgelegt und beim nächsten Umlauf erneut verwendet. Zu diesem Zweck wird die Weiche 24 so gesteuert, dass die Greifer den oberen Kulissenweg fahren und nicht abgesenkt werden. Auf dieser ersten Führungsnutstrecke S₁ bleibt das Vakuum des Greifers bis zur Abgabeposition der Kette aktiviert, so dass das Produkt in die Kette rückgeführt wird. Die Spendereinrichtung, z. B. ein Abstapler, welcher die Förderkette mit Produkten bestückt, erkennt dabei, dass die entsprechende Kettenteilung des Rücklaufes bereits mit einem Produkt belegt ist und spendet in diese Teilung kein weiteres Produkt. Der Umlauf der Greifer und der Umlauf der Kette ist dabei synchron, d.h. Greifer und Kette bewegen stets sich mit derselben Geschwindigkeit.

Die erfindungsgemässe Vorrichtung bietet folgende Vorteile:
- Schnelles Verfahren zum Einsetzen für Produkte in einer kontinuierlich laufenden, modular aufgebauten Verpackungsmaschine.
- Produkte können rückgeführt und erneut in den Prozess eingeschleust werden.
- Durch die Entkopplung der Module wird Ausschuss durch bereits mit Klebepunkten versehene Packungen, in die kein Produkt geklebt wurde, vermieden.
- Hohe Betriebssicherheit, da die Produkte am Entnahmepunkt mittig an der hinteren Kettenteilung gegriffen werden und am Abgabepunkt im Rückführungsfall fall mittig zwischen die Kettenteilung abgelegt werden.
- Einfache Steuerungstechnik; da die Förderkette und die Greiferumläufe synchron laufen, sind keine individuellen Servoantriebe notwendig.

## Patentansprüche

1. Vorrichtung zum Fördern von Produkten zu einem Bestimmungsort, umfassend
- eine umlaufende Förderkette (12) mit entlang einer ersten Umlaufbahn (U₁) umlaufenden Mitnehmern (14) mit einer Kettenteilung (T₁)
- ein umlaufendes Fördermittel (16) mit an diesem von einander beabstandet angeordneten, entlang einer zweiten Umlaufbahn (U₂) umlaufenden Greifern (18),
- einen ersten Bereich (A) der ersten (U₁) und zweiten Umlaufbahn (U₂) zur Übernahme von Produkten mittels der Greifer (18) von der Förderkette (12) aus der ersten Umlaufbahn (U₁) in die zweite Umlaufbahn (U₂),
- einen zweiten Bereich (B) der zweiten Umlaufbahn (U₂) zur Übergabe von Produkten von den Greifern (18) am Bestimmungsort,
- einen dritten Bereich (C) der ersten (U₁) und zweiten Umlaufbahn (U₂) zur Rückgabe von am Bestimmungsort nicht benötigten Produkten von den Greifern (18) aus der zweiten Umlaufbahn (U₂) auf die Förderkette (12) in die erste Umlaufbahn (U₁),
wobei die Wegstrecke (L₁) der Förderkette (12) auf der ersten Umlaufbahn (U₁) von einem Übernahmeort der Produkte im ersten Bereich (A) zu einem Rückgabeort im dritten Bereich (C) und die Wegstrecke (L₂) der Greifer (18) auf der zweiten Umlaufbahn (U₂) vom Übernahmeort der Produkte im ersten Bereich (A) zum Rückgabeort im dritten Bereich (C) so gewählt sind, dass sich zwischen der Förderkette (12) und den Greifern (18) zwischen dem Rückgabeort und dem Übernahmeort eine Phasenverschiebung (ΔT₁) um einen Bruchteil der Kettenteilung (T₁) ergibt.

2. Vorrichtung nach Anspruch 1, **dadurch gekennzeichnet, dass** die zweite Umlaufbahn (U₂) im zweiten Bereich (B) wahlweise in einer von zwei höhenversetzten Ebenen verläuft.

3. Vorrichtung nach Anspruch 2, **dadurch gekennzeichnet, dass** die zweite Umlaufbahn (U₂) kulissengesteuert ist und im zweiten Bereich (B) über eine Weiche (24) einstellbar ist.

4. Vorrichtung nach einem der Ansprüche 1 bis 3, **dadurch gekennzeichnet, dass** der Umlauf der Förderkette (12) und der Umlauf der Greifer (18) synchron mit derselben Geschwindigkeit erfolgen.

5. Vorrichtung nach Anspruch 4, **dadurch gekennzeichnet, dass** der Umlauf der Förderkette (12) und der Umlauf der Greifer (18) über einen gemeinsamen Antrieb erfolgt.

6. Verwendung einer Vorrichtung nach einem der vorangehenden Ansprüche zum Zuführen von Produkten zu einer kontinuierlich laufenden, modular aufgebauten Verpackungsmaschine.

## Claims

1. Apparatus for conveying products to a destination, comprising
- a circulating conveying chain (12) having drivers (14) having a chain pitch (T₁) and circulating around a first circulatory path (U₁),
- a circulating conveying means (16) having grippers (18) arranged in a spaced-apart manner thereon and circulating around a second circulatory path (U₂),
- a first region (A) of the first circulatory path (U₁) and the second circulatory path (U₂) for taking products by means of the grippers (18) off the conveying chain (12) from the first circulatory path (U₁) and into the second circulatory path (U₂),
- a second region (B) of the second circulatory path (U₂) for transferring products from the grippers (18) to the destination,
- a third region (C) of the first circulatory path (U₁) and the second circulatory path (U₂) for returning products that are not required at the destination by way of the grippers (18) from the second circulatory path (U₂) onto the conveying chain (12) and into the first circulatory path (U₁),
wherein the distance (L₁) travelled by the conveying chain (12) on the first circulatory path (U₁) from a location at which the products are taken in the first region (A) to a returning location in the third region (C) and the distance (L₂) travelled by the grippers (18) on the second circulatory path (U₂) from the location at which the products are taken in the first region (A) to the returning location in the third region (C) are selected such that a phase shift (ΔT₁) by a fraction of the chain pitch (T₁) arises between the conveying chain (12) and the grippers (18) between the returning location and the taking location.

2. Apparatus according to Claim 1, **characterized in that** the second circulatory path (U₂) extends as desired in one of two vertically offset planes in the second region (B).

3. Apparatus according to Claim 2, **characterized in that** the second circulatory path (U₂) is guide controlled and is settable in the second region (B) via a diverter (24).

4. Apparatus according to one of Claims 1 to 3, **characterized in that** the conveying chain (12) and the grippers (18) circulate synchronously at the same speed.

5. Apparatus according to Claim 4, **characterized in that** the conveying chain (12) and the grippers (18) circulate via a common drive.

6. Use of an apparatus according to one of the preceding claims for supplying products to a continuously running packaging machine of modular construction.

## Revendications

1. Dispositif pour transporter des produits vers un lieu spécifié, comprenant :
- une chaîne de transport en mouvement en boucle fermée (12), avec des dispositifs d'entraînement (14) circulant en boucle fermée le long d'une première trajectoire circulaire (U₁) avec une division de chaîne (T₁),
- un moyen de transport (16) circulant en boucle fermée avec des dispositifs de préhension (18) circulant en boucle fermée le long d'une deuxième trajectoire circulaire (U₂), espacés les uns des autres et disposés sur le moyen de transport,
- une première région (A) de la première trajectoire circulaire (U₁) et de la deuxième trajectoire circulaire (U₂) pour transférer des produits au moyen des dispositifs de préhension (18) de la chaîne de transport (12) depuis la première trajectoire circulaire (U₁) à la deuxième trajectoire circulaire (U₂),
- une deuxième région (B) de la deuxième trajectoire circulaire (U₂) pour transférer des produits au moyen des dispositifs de préhension (18) au lieu spécifié,
- une troisième région (C) de la première (U₁) et de la deuxième (U₂) trajectoire circulaire pour ramener des produits non requis au lieu spécifié au moyen des dispositifs de préhension (18) depuis la deuxième trajectoire circulaire (U₂) sur la chaîne de transport (12) à la première trajectoire circulaire (U₁),
la section de déplacement (L₁) de la chaîne de transport (12) sur la première trajectoire circulaire (U₁) depuis un lieu de transfert des produits dans la première région (A) jusqu'à un lieu de retour dans la troisième région (C) et la section de déplacement (L₂) des dispositifs de préhension (18) sur la deuxième trajectoire circulaire (U₂) depuis le lieu de transfert des produits dans la première région (A) jusqu'au lieu de retour dans la troisième région (C) étant choisies de telle sorte qu'entre la chaîne de transport (12) et les dispositifs de préhension (18), entre le lieu de retour et le lieu de transfert, se produise un décalage de phase (ΔT₁) d'une fraction de la division de chaîne (T₁).

2. Dispositif selon la revendication 1, **caractérisé en ce que** la deuxième trajectoire circulaire (U₂) s'étend dans la deuxième région (B) de manière sélective dans l'un ou l'autre de deux plans décalés en hauteur.

3. Dispositif selon la revendication 2, **caractérisé en ce que** la deuxième trajectoire circulaire (U₂) est commandée par coulisse et peut être ajustée dans la deuxième région (B) par le biais d'un aiguillage (24).

4. Dispositif selon l'une quelconque des revendications 1 à 3, **caractérisé en ce que** la circulation en boucle fermée de la chaîne de transport (12) et des dispositifs de préhension (18) a lieu de manière synchrone à la même vitesse.

5. Dispositif selon la revendication 4, **caractérisé en ce que** la circulation en boucle fermée de la chaîne de transport (12) et des dispositifs de préhension (18) a lieu par le biais d'un entraînement commun.

6. Utilisation d'un dispositif selon l'une quelconque des revendications précédentes, pour acheminer des produits à une machine d'emballage de construction modulaire, tournant en continu.
